Europäisches Patentamt

European Patent Office

Office européen des brevets

(19)

(11) EP 1 494 345 A2

## (12) EUROPEAN PATENT APPLICATION

(43) Date of publication:
**05.01.2005 Bulletin 2005/01**

(51) Int Cl.[7]: **H02P 1/30**

(21) Application number: **04013193.0**

(22) Date of filing: **03.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **01.07.2003 JP 2003189150**

(71) Applicant: **TSUDAKOMA KOGYO KABUSHIKI KAISHA**
**Kanazawa-shi, Ishikawa-ken 921-8650 (JP)**

(72) Inventors:
- **Takashima, Makoto**
  **Kanazawa-shi Ishikawa-ken (JP)**
- **Takano, Toshio**
  **Mattou-shi Ishikawa-ken (JP)**
- **Takamoto, Yasuhisa**
  **Suzuka-shi Mie (JP)**

(74) Representative: **Turi, Michael, Dipl.-Phys. et al**
**Samson & Partner**
**Widenmayerstrasse 5**
**80538 München (DE)**

### (54) Method and device for driving induction motor

(57) When a multiphase induction motor is operated by means of a variable-voltage, variable-frequency inverter which feeds an AC voltage to a primary winding of the multiphase induction motor, the inverter performs processing pertaining to a first process for increasing an output frequency to an output frequency corresponding to a steady-state operation and producing an output for increasing the AC voltage to an overvoltage state in accordance with the output frequency, thereby accelerating the induction motor; and processing pertaining to a second process for decreasing the AC voltage to a voltage corresponding to the steady-state operation when the rotational speed of the induction motor has achieved a predetermined speed.

FIG. 1

EP 1 494 345 A2

**Description**

**BACKGROUND OF THE INVENTION**

The present invention relates to an inverter for feeding an alternating-current (AC) voltage to an induction motor, as well as to a technique for driving an induction motor which minimizes a time required before achievement of a rotational speed corresponding to steady-state operation, by means of feeding an overvoltage to the induction motor.

Conventionally, a multiphase induction motor is used in a weaving machine for driving a main shaft of the weaving machine. A rotational speed of the weaving machine must be set in accordance with specifications of a web. The multiphase induction motor is driven by way of a variable-voltage variable-frequency inverter whose output frequency and voltage are to be controlled. The weaving machine requires abrupt acceleration of a rotational speed, and the capacity of the inverter is also limited to a certain extent. Therefore, as one method for inhibiting occurrence of a rush current, there is known, as shown in JP-A-63-314183, an inverter in which an AC voltage having a minimum frequency on the order of 0.5 Hz or thereabouts is output at the time of startup of the induction motor for a period of time required to establish a magnetic flux of the induction motor; and subsequently, the output frequency is increased up to steady-state operation speed during a period of about 100 ms, thereby driving the induction motor

However, according to such a driving method, an ordinary rated voltage is merely supplied to the induction motor when the rotational speed is increased up to the steady-state operation speed. Since an inertial load of the weaving machine is very high inertial, even when an attempt is made to start the weaving machine in the manner mentioned above, start-up torque becomes deficient. Thereby raising a problem of consumption of time before the weaving machine is finally started up to a rotational speed for the steady state operation. For this reason, in the weaving machine, reed-beating force becomes deficient during a period of such a transitional rotational state, which in turn raises a problem of failure to prevent a weaving bar.

**SUMMARY OF THE INVENTION**

An object of the present invention is to provide an induction motor control technique for resolving the problems.

[Means for Solving the Problems]

The object can be achieved by a method for driving an induction motor according to the present invention, wherein a multiphase induction motor is operated by a variable-voltage, variable-frequency inverter that feeds anAC voltage to a primary winding of the multiphase induction motor, there are performed processing pertaining to a first process for increasing a frequency to an output frequency corresponding to a steady-state operation and producing an output for increasing the AC voltage to an overvoltage state in accordance with the output frequency, thereby accelerating the induction motor; and processing pertaining to a second process for lowering the AC voltage to a voltage corresponding to the steady-state operation when the rotational speed of the induction motor has achieved a predetermined speed.

Further the object also can be achieved by a drive device of an induction motor according to the present invention comprises: a multiphase induction motor; and a variable-voltage variable-frequency inverter which is connected between a commercial power source and the multiphase induction motor and outputs an AC voltage to a primary winding of the induction motor, wherein, upon receipt of an instruction for starting the induction motor, the inverter increases an output frequency toward a frequency corresponding to a rotational speed achieved during steady-state operation, as well as accelerating the induction motor by means of producing an output for increasing the AC voltage in accordance with the output frequency; and said inverter decreases the AC voltage to a voltage corresponding to the steady-state operation when the rotational speed of the induction motor has achieved a predetermined speed by determining the rotational speed of the induction motor.

The predetermined speed can be set to the rotational speed of the induction motor achieved during a steady-state operation or to speeds in proximity to the rotational speed. The speed of the induction motor can also be handled as a speed itself. However, in place of the speed of the induction motor there can be employed another index corresponding to an actual rotational speed; e.g., a slip frequency.

It is more preferable that the inverter comprises a main circuit for outputting power supplied from the commercial power source to the primary winding in accordance with a base drive signal; and a control circuit for supplying the base drive signal to the main circuit, wherein, upon receipt of an instruction for starting the induction motor, the control circuit outputs the base drive signal in order to increase an output frequency toward a frequency corresponding to a rotational speed achieved during steady-state operation, as well as outputs the base drive signal in order to bring the AC voltage into an overvoltage state in accordance with the output frequency; and said control circuit outputs the base drive signal in order to decrease the AC voltage to a voltage corresponding to the steady-state operation when the rotational speed of the induction motor has achieved the predetermined speed by determining the rotational speed of the induction motor. In this case, the control circuit preferably determines a slip frequency of the induction motor in terms of a relationship between an output current value of the main circuit and an excitation current output from the main circuit and detects attainment of the predetermined speed by means of comparing the slip frequency with a set value corresponding to the predetermined speed.

More preferably, the inverter comprises a main circuit for outputting power supplied from the commercial power source to the primary winding according to a base drive signal; a control circuit which receives a start instruction for starting the induction motor and generates a base drive signal in order to increase an output frequency and an output voltage in response to an input of the start instruction; and signal generation means which receives a signal corresponding to a rotational speed of the induction motor and outputs an attainment signal when the rotational speed of the induction motor has attained the predetermined speed, wherein, upon receipt of the instruction for starting the induction motor, the control circuit outputs the base drive signal in order to increase an output frequency toward a frequency corresponding to a rotational speed achieved during steady-state operation, as well as outputs the base drive signal in order to bring the AC voltage into an overvoltage state in accordance with the output frequency; and, upon receipt of the attainment signal as a result of the rotational speed of the induction motor having attained the predetermined speed from the signal generation means, the control circuit outputs the base drive signal in order to output an AC voltage which decreases an output voltage toward a voltage achieved during steadstate operation.

The signal generation means may be disposed outside rather than being disposed within the inverter. In this case, more preferably, a rotational speed detector is coupled to an output shaft of the induction motor, and a rotational speed signal output from the detector is input to the signal generation means; and the signal generation means outputs an attainment signal upon detection of the rotational speed having attained a predetermined speed.

Further, the control circuit may set a V/F pattern for the overvoltage states. The control circuit may output the base drive signal in order to cause anAC voltage corresponding to the output frequency on the basis of the V/F pattern when the AC voltage is brought into an overvoltage state in accordance with the output frequency. Thus, the control circuit may control the induction motor through so-called V/F control operation. As another embodiment, the induction motor may be controlled through so-called vector control, by means of outputting said base drive signal in order to produce an AC voltage which adjusts at least one of the output frequency and the voltage to be brought into an overvoltage, in terms of a relationship between the output frequency to be increased and a slip frequency corresponding to the determinedrotational speedof the induction motor.

BRIEF DESCRIPTION OF THE DRAWINGS

Fig. 1 is a circuit block diagram showing a first embodiment of the invention;
Fig. 2 is an internal block diagram of a control circuit shown in Fig. 1;
Fig. 3 is a waveform diagram showing operation of the circuits shown in Figs. 1 and 2;
Fig. 4 is a circuit block diagram showing a second embodiment of the invention;
Fig. 5 is a waveform diagram showing operation of the circuits shown in Figs. 1 and 2; and
Fig. 6 is a circuit block diagram in which a main circuit area has been modified as compared with the first and second embodiments of the invention.

**DESCRIPTION OF THE PREFERRED EMBODIMENT**

(1) First Embodiment

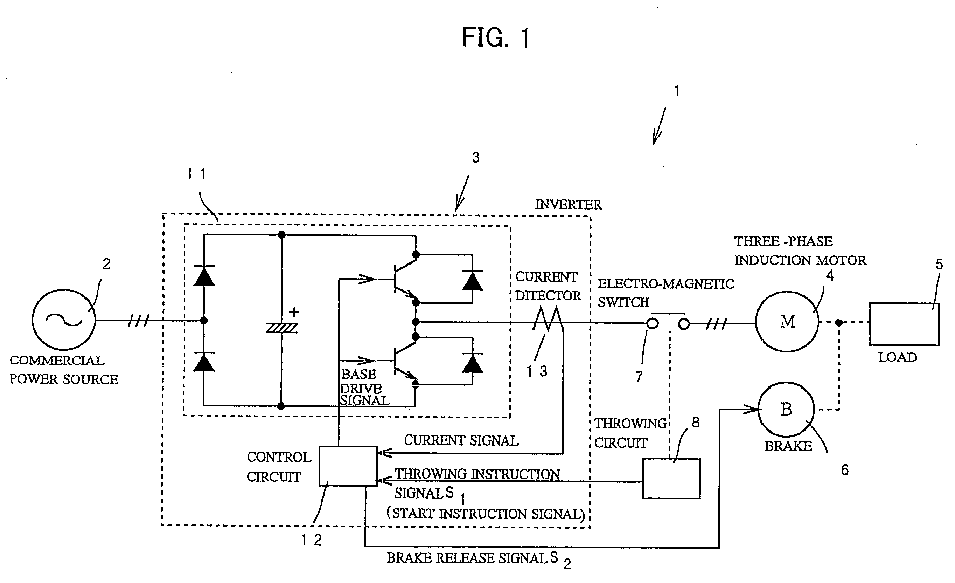

Fig. 1 is a circuit diagram showing a first embodiment of a method for driving an induction motor according to the present invention.

As shown in Fig. 1, a drive device 1 for driving an inductionmotor 4 includes an inverter 3 connected to a commercial power source 2. An output of the inverter 3 is connected to a primary winding of the three-phase induction motor 4 whose primary winding is delta-connected, by way of an electromagnetic contactor 7. A load 5 and a brake 6 are connected to an output shaft of the induction motor 4.

The inverter 3 is configured as a so-called variable-voltage variable-frequency inverter comprising an inverter main circuit 11, a current detector 13, and an inverter control circuit 12. The inverter main circuit 11 converts an alternating-current (AC) voltage of the commercial power source 2 into a direct-current (DC) voltage by means of a diode rectifier and a smoothing capacitor and comprises inverted parallel circuits which are bridge-connected; which convert the DC voltage into an AC voltage; and which each comprise a transistor and a diode. The current detector 13 comprises a shunt resistor for detecting an electric current output from the inverter main circuit 11. The inverter control circuit 12 has a control function for causing the inverter main circuit 11 to output an AC voltage having a desired voltage and a desired frequency, by means of generating a base drive signal to activate or deactivate the transistors through, e.g., PWM control. The inverter control circuit 12 also has a current limitation function for limiting the voltage of an output from the inverter main circuit 11 when a current detected by the current detector 13 has exceeded a predetermined upper limit value (e.g., 150% or thereabouts of the rated current output from the inverter main circuit 11) in order to reduce the detected current to an output current which is equal to or less than the upper limit value. The inverter 3 is equipped with a throwing circuit 8, and an output from the throwing circuit 8 is connected to both an electromagnetic contactor 7 and the control circuit 12.

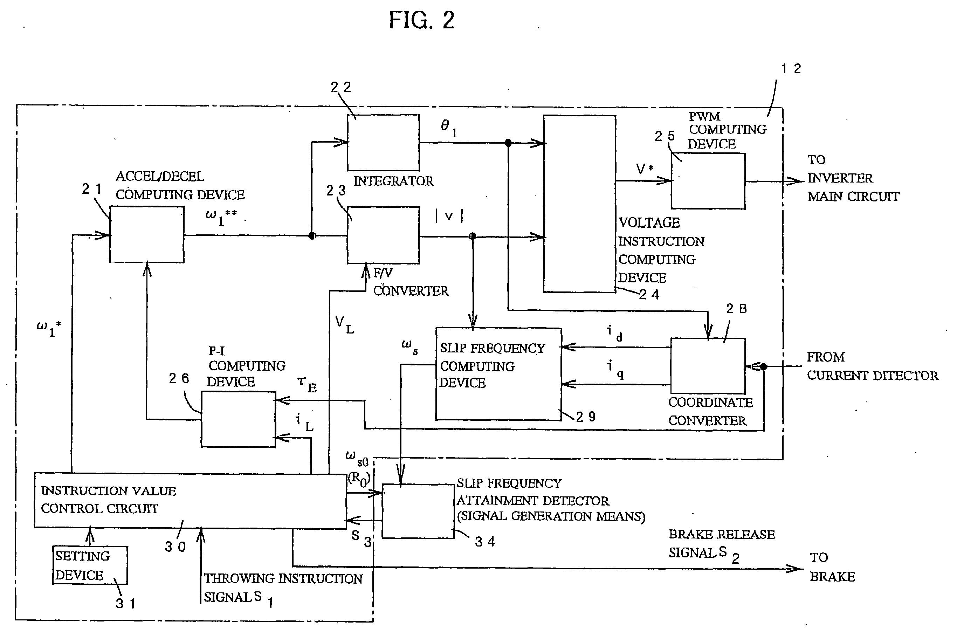

Fig. 2 is adetailedcircuitblockdiagramof the inverter control circuit 12 in the inverter 3 shown in Fig. 1.

The control circuit 12 has an acceleration/deceleration computing device 21; a voltage instruction computing device 24 which receives an output from an integrator 22 and that from an F/V converter 23, both also belonging to the control circuit 12; a PWM computing device 25; a proportional/integral computing device (P-I computing device) 26; and an instruction value control circuit 30 connected to a setting device 31. In order to determine a slip frequency corresponding to the rotational speed of the induction motor 4, the control circuit 12 further comprises a coordinate converter 28 and a slip frequency computing device 29. Further, in order to determine the status of attainment of a slip frequency, the control circuit 12 is also equipped with a slip frequency attainment detector 34 serving as signal generation means (signal generator).

The acceleration/deceleration computing device 21 has the function of incrementing or decrementing, in advance, the setting device 31 or the like at a predetermined rate of increase or decrease in frequency in response to a frequency instruction value $\omega_1{}^*$ which is set by the instruction value control circuit 30 and output to the inductionmotor 4, thereby finallyoutputting a frequency instruction value $\omega_1{}^{**}$ equal to the frequency instruction value $\omega_1{}^*$. The acceleration/deceleration computing device 21 has another function of deriving, through use of the proportional/integral (P-I) computing device 26, an acceleration time during which the value detected by the current detector 13 would not exceed a current limit value (i.e., an upper limit value) $i_L$ output from the instruction value control circuit 30 during acceleration of the induction motor 4 to be described later; and of outputting the frequency instruction value $\omega_1{}^{**}$ at the rate of increase corresponding to the acceleration time. The frequency instruction value $\omega_1{}^{**}$ output from the acceleration/deceleration computing device 21 is input to the integrator 22 and the F/V converter 23. The integrator 22 determines a phase angle set value $\theta_1$ through time integration of the input frequency instruction value $\omega_1{}^{**}$ and outputs the thus-determined phase angle set value $\theta_1$ to the voltage instruction computing device 24. The F/V converter 23 outputs, to the voltage instruction computing device 24, a voltage setting value $|V|$ which is determined on the basis of the input frequency instruction value $\omega_1{}^{**}$ and a predetermined V/f ratio (i.e., a V/f pattern), and the voltage setting value is also output, as abranch output, to the slip frequency computing device 29 to be described later. The voltage instruction computing device 24 converts the thus-input phase angle set value $\theta_1$ and the voltage setting value $|V|$ into voltage instruction values v* of respective phases of the induction motor 4. The pulse width modulation (PWM) computing device 25 supplies, as a base drive signal, an ON/OFF drive signal corresponding to the voltage instruction value v* of each phase to transistors constituting the inverter main circuit 11.

The inverter control circuit 12 further comprises the coordinate converter 28, the slip frequency computing device 29, and the slip frequency attainment detector 34. The coordinate converter 28 converts the current detected by the current detector 13 into coordinates on the basis of the phase angle set value $\theta_1$ and decomposes the coordinates into a current component $i_d$ in phase with an exciting current of the induction motor 4, and a current component $i_q$ in phase with a torque current. The slip frequency computing device 29 computes a slip frequency $\omega_s$ from the exciting current component $i_d$, the torque current component $i_q$, the input voltage setting value $|V|$, and an electric constant of the induction motor 4 previously input by way of the setting device 31 by means of the conventional technique. The slip frequency attainment detector 34 compares the slip frequency $\omega_s$ with a setting value $f_a$ corresponding to the rotational speed for steady-state operation output from the instruction value control circuit 30 during steady-state operation. When the slip frequency $\omega_s$ has attained the setting value Ro, the slip frequency attainment detector 34 outputs a speed attainment signal $S_3$ to the instruction value control circuit 30.

The instruction value control circuit 30 receives a throwing instruction signal $S_1$ from the throwing circuit 8 and the speed attainment signal $S_3$ from the slip frequency attainment detector 34. The instruction value control circuit 30 also outputs the frequency instruction value $\omega_1{}^*$ which is an output frequency during steady-state operation, an output voltage $V_L$, and the current limit value $i_L$ to the acceleration/deceleration computing device 21, the F/V converter 23, and the P-I computing device 26, respectively. The instruction control circuit 30 also outputs a brake release signal $S_2$ to the external brake 6 and a frequency setting value $\omega_{so}$ of a frequency corresponding to a predetermined rotational speed to the slip frequency attainment detector 34. The setting device 31 is connected to the instruction value control circuit 30, and information required for operation of the inverter 3 can be input byway of the setting device 31. More specifically, the required information to be input to the setting device 31 comprises an output frequency $f_1$ and an output voltage $v_1$ for pre-excitation induced prior to start-up of the induction motor 4, a frequency $f_2$ and a voltage $V_2$ which are parameters for determining the V/F pattern used at the time of overvoltage driving operation, a length of a period $T_1$ during which a frequency is to be increased at the time of start-up, a length of a period $T_2$ during which the output voltage is decreased after the induction motor has achieved at the predetermined rotational speed, an output voltage $V_3$ during steady-state operation, and a limit value $i_L$ of an electric current output from the inverter, as well as electrical constants including, e.g., a secondary time constant of the induction motor or the like, required to compute a slip frequency. These information items are transmitted to respective blocks by way of unillustrated bound wires or the like.

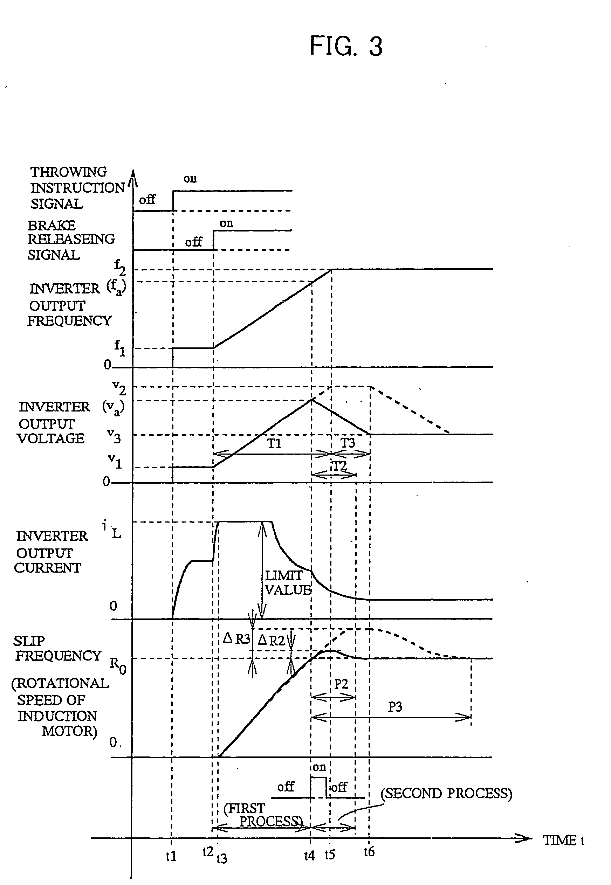

Operation of the circuit configuration shown in Fig. 2 will be described hereinbelow by reference to a waveform diagram shown in Fig. 3.

First, when the throwing instruction signal $S_1$ is not generated, the electromagnetic contactor 7 remains open. And, the inverter 3 is activated while the voltage of the commercial power source 2 has been established. As a result of the brake 6 coupled to the load 5 remaining operative, the load 5 stays locked. Subsequently, upon receipt of the throwing instruction signal $S_1$ from the throwing circuit 8 at time $t_1$, the instruction value control circuit 30 outputs, to the acceleration/deceleration computing device 21, a frequency $f_1$ corresponding to pre-excitation performed for inhibiting occurrence of a rush current. The acceleration/deceleration computing device 21 outputs a signal corresponding to the frequency $f_1$ to the F/V converter 23 and the integrator 22, which are circuits in subsequent stages. As a result, the F/V converter 23 outputs the output voltage instruction value $|V|$ corresponding to the pre-excitation frequency $f_1$ in accordance with a predetermined V/F pattern for startup. Thereby, the inverter 3 outputs an AC voltage having the output frequency $f_1$ and the output voltage $V_1$. As mentioned above, the induction motor 4 remaining constrained as a result of operation of the brake 6 is brought into an excited state. The induction motor 4 is subjected to pre-excitation prior to start-up, whereby the magnetic flux of the motor has been established beforehand. As a result, there is inhibited occurrence of a rush current, which would otherwise arise at start-up of the induction motor 4 performed at a time subsequent to time $t_2$ to be described later, thereby generating start-up torque.

At time $t_2$ which has lapsed from time $t_1$ by a predetermined period of time (e.g., tens of milliseconds or thereabouts), the instruction value control circuit 30 generates the brake release signal $S_2$ for the brake 6 and outputs a frequency setting value $\omega_1^*$ for steady-state operation to the acceleration/deceleration computing device 21. Therefore, the acceleration/deceleration computing device 21 increases an output of the frequency setting value $\omega_1^{**}$ over a predetermined acceleration period T1 (ranging from hundreds of milliseconds to a few seconds or thereabouts) toward the output frequency $f_2$ for steady-state operation. As a result, the F/V converter 23 outputs the output voltage instruction value $|V|$ corresponding to the input frequency $\omega_1^{**}$ for predetermined start-up purpose on the basis of the V/F pattern (voltages $V_1, V_2$ are set and generated such that an overvoltage is fed). Therefore, the inverter 3 outputs an AC voltage which is increased from moment to moment in accordance with the output frequency and the output overvoltage. Further, the proportional-integral (P-I) computing device 26 derives an acceleration time during which the current value $\tau_E$ detected by the current detector 13 for detecting an electric current output from the inverter 3 does not exceed the current limit value $i_L$ output from the instruction value control circuit 30. The signal $\tau_E$ is output to the acceleration/deceleration computing device 21. As a result, the output voltage of the inverter 3 is controlled such that the output current of the inverter does not exceed the limit value, and an overvoltage is fed. In this way, processing pertaining to a first process for accelerating the induction motor 4 is performed, so that the rotational speed of the induction motor is gradually accelerated. Theabove-describedembodimentisdirectedtoward an example in which the circuit of the inverter is configured such that the inverter is driven while an output voltage is limited. However, the current limit valuemaybe set arbitrarily, or a limit value which is fixed by design may be employed for the current limit value. In the latter case, a circuit pertaining to setting of the limit value may be omitted.

The induction motor 4 outputs an AC voltage such that an overvoltage is fed in response to an output frequency. Therefore, the induction motor 4 can be driven such that the rotational speed exceeds a rotational speed for steady-state operation with lapse of time. The speed attainment signal $S_3$ is output to the instruction value control circuit 30 at time $t_4$ at which the slip frequency $\omega_s$ corresponding to the rotational speed for steady-state operation attains the set value Ro. Therefore, the instruction value control circuit 30 decreases the limit setting value $V_L$ toward the voltage for steady-state operation over a voltage drop period T2 at a predetermined decreasing rate, whereby the output AC voltage is decreased. In this way, there is performed processing pertaining to a second process for decreasing the AC voltage, which is to be supplied to the induction motor, to an output voltage $V_3$ for steady-state operation. As a result of the rate of decrease in the limit setting value $V_L$ being set in consideration of a secondary constant of the induction motor, the rotational speed of the induction motor can be maintained smoothly in the vicinity of the target speed during a period from time $t_4$ to time $t_5$. At time $t_6$, there is achieved an AC voltage corresponding to steady-state operation. Insubsequent operations, the induction motor enters a steady-state operation state of an energy-saving mode, and an AC voltage which maintains the output frequency and the output voltage is output.

A slip frequency (i.e., a rotational speed) of the induction motor which is driven in the manner set forth changes as indicated by a solid line in the drawing. Even when time $t_4$ has lapsed, the slip frequency (i.e., the rotational speed of the induction motor) exceeds the set value Ro under the influence of inertial energy. However, the output voltage is decreased immediately, to thus decelerate the induction motor. As a result, the slip frequency finally arrives at the set value Ro during a period P2. Subsequently, the number of revolutions achieved at that time is maintained. In relation to a case where operation for decreasing the voltage output from the inverter 3 is performed by means of time control regardless of rotational speed of the induction motor; that is, where the output voltage is decreased toward the voltage $V_3$ for steady-state operation over a period T3 after completion of an acceleration time T1, a relationship between the voltage output from the inverter 3 and the slip frequency is illustrated by broken lines in the drawing. A period during which the rotational speed has once achieved the present value Ro and finally arrives at the set value Ro is represented as P3. In the present invention, it is clearly evident that, when operation of the induction motor 4 is initiated (at start-up), the period that elapses before the rotational finally attains the set value Ro is shortened.

In order to resolve occurrence of a weaving bar, which would otherwise be caused by a deficiency in reed-beating force at the initiation of operation, a weaving machine—which is a piece of textile machinery—conventionally has employed an induction motor or a so-called super-startup motor, wherein the motor is configured so as to be able to switch the primary winding of the induction motor by way of a changeover switch to accelerate attainment of the rotational speed of the motor and wherein, at the time of start-up, the motor is driven with delta-connection and with star connection during steady-state operation. Because of the necessity for setting the operating speed of the weaving machine (i. e., the rotational speed of the induction motor) in accordance with specifications of a web, the foregoing driving device can be used for such a weaving machine. More specifically, the primary winding of the inductionmotor is connecteddirectly to an output of the inverter 3. And, the voltages $V_1$, $V_2$ are set such that a voltage, which is $\sqrt{3}$ times the voltage required during steady-state operation, is applied across the primary winding during a period from time $t_1$ to time $t_4$, in accordance with a resultantly-prepared V/F pattern, an AC voltage is increased. In operations subsequent to time $t_4$, the AC voltage is decreased toward the voltage $V_3$ for steady-state operation. By means of the foregoing operations, there can be achieved a rising characteristic of the induction motor (i.e., the number of revolutions of the weaving machine) which is equal to that achieved when the number of revolutions is set by means of replacement of a motor pulley, through use of a super-start-up motor driven with a conventional commercial power source.

The voltage output during the period from time $t_1$ to time $t_4$ is preferably set so as to become $\sqrt{3}$ times the voltage required during steady-state operation. However, the voltage may be set arbitrarily within a range in which it exceeds the voltage required during steady-state operation and is not affected by the inconvenience of heat generated by the motor or the like. The length T1 of the acceleration time—during which the frequency is increased from time $t_2$ to $t_5$—and the rate of increase in frequency are desirably set in accordance with the secondary constant of the motor. However, in the case of a weaving bar (a so-called heavy filling bar) at which circumstances worsen as a result of an abrupt increase in the number of revolutions, the rate of increase in frequency can also be reduced. In the case of the weaving bar, the length of an acceleration time may be set arbitrarily in accordance with the status of the filling bar.

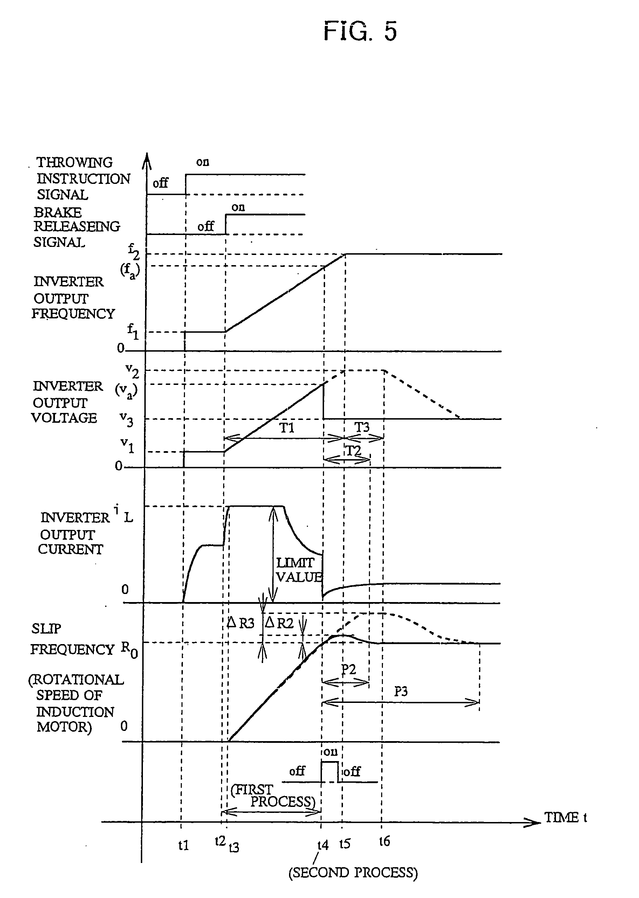

In the illustrated embodiment, the rate of increase in frequency is increased constantly over time. However, for instance, it is also possible to gradually increase the rate of increase in frequency or to change the rate of change over time. The only requirement is that the rate of decrease in output voltage be set such that large fluctuations do not arise in the rotational speed of the induction motor 4 after the rotational speed of the motor has attained the set value $R_o$. Therefore, the rate of decrease may be changed over time rather than the rate of change being decreased constantly over time as described in connection with the illustrated embodiment; for example, the rate of decrease being gradually increased, or the rate of decrease being high at the beginning but being made lower over time. Alternatively, an increase in frequency and a drop in output voltage may be increased or decreased stepwise rather than consecutively over time. Moreover, the output voltage may be switched to an output voltage of steady-state operation at time $t_4$ and the thus-switched voltage may be output, as shown in Fig. 5, rather than the output voltage being decreased with lapse of time as in period T2.

(2) Second Embodiment

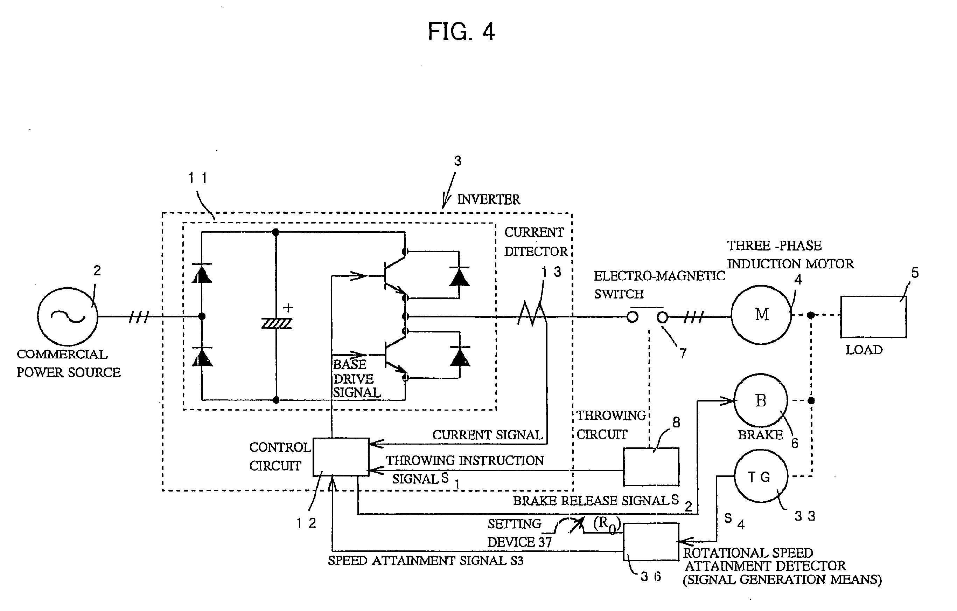

Fig. 4 is a circuit diagram showing a second embodiment of the method for driving an induction motor according to the present invention. This embodiment is directed toward an example in which a speed detector 33 is coupled to an output shaft of the induction motor 4 and in which a rotational speed attainment detector 36—which serves as signal generation means for generating a signal on the basis of the rotational speed of the inductionmotor 4—is disposed outside the control circuit 12.

A speed signal S4 detected by the speed detector 33 is input to the rotational speed attainment detector 36. A setting device 37 is also connected to the rotational speed attainment detector 36. In order to output the speed attainment signal to the control circuit 12, the rotational speed attainment detector 36 is connected to the control circuit 12. The threshold value (set value) Ro is set on the setting device 37 on the basis of the rotational speed achieved during the steady-state operation of the induction motor. The rotational speed attainment detector 36 is configured of a comparator or the like so as to produce a signal when the so-called speed signal has exceeded-the threshold value (set value) Ro. Therefore, the control circuit 12 releases the brake 6 at time $t_2$ when the throwing signal $S_1$ is generated, as well as accelerating the induction motor 4 by means of generating an AC voltage whose output frequency and output voltage have been increased. As a result of the rotational speed of the induction motor 4 having attained the set value Ro, the arrival signal S3 is input from the rotational speed attainment detector 36. Thereby, the AC voltage can be decreased in the same fashion toward the voltage obtained during the steady-state operation.

In the embodiment, the rotational speed attainment detector 36 (i.e., signal generation means) is disposed outside the control circuit 12. However, as in the case of a counterpart element in the first embodiment, the rotational speed attainment detector 36 can be disposed in the control circuit 12 as well.

### (3) Modifications of the first and second embodiments

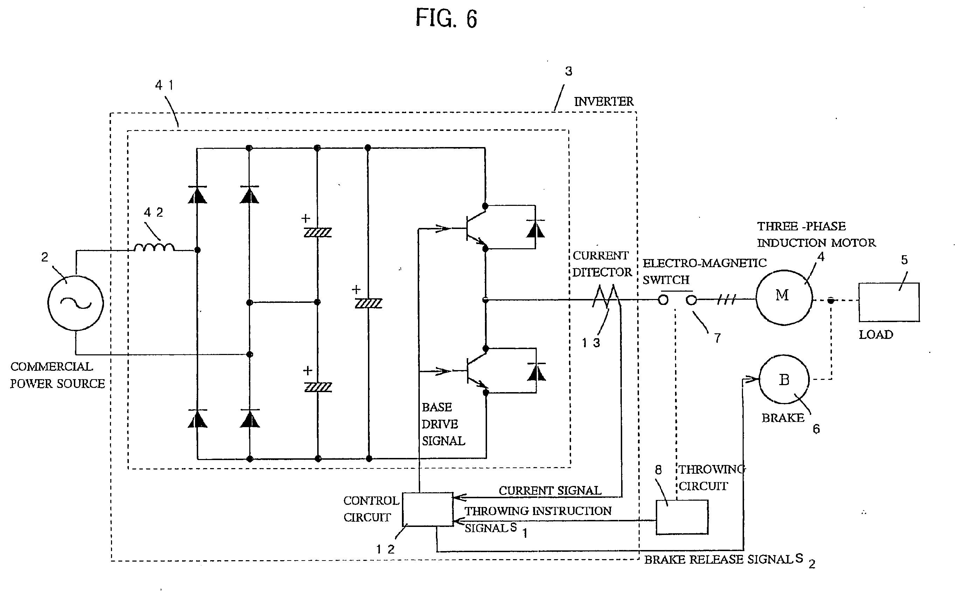

The following can be conceived as modifications of the first and second embodiments. The first and second embodiments are examples in which the primary winding of the induction motor 4 is delta-connected and coupled to the inverter 3. However, the primary winding can also be configured as being star-connected. For instance, in a case where a voltage, which is higher than the peak value of the commercial power source voltage, must be fed when an overvoltage is fed to the primary winding at start-up of the induction motor, the inverter 3 should be configured as shown in, e.g., Fig. 6. A main circuit 41 of the inverter 3 shown in Fig. 6 is an example in which a so-called voltage doubler circuit is configured. In this voltage doubler circuit, a peak voltage of a single-phase commercial power source is boosted double as a result of power being fed from the illustrated diode to the capacitor by way of a reactor 42, and the thus-boosted voltage is output to the capacitor. The commercial power source used for feeding is not limited to a single-phase power source but maybe configured as a multiphase power source such as a three-phase power source. There are several conceivable methods: for example, a method for generating a high voltage through use of a known chopping circuit in place of the main circuits 11, 41 having the foregoing configurations, or a method for boosting the voltage to be fed to the inverter 3 by way of a transformer while the voltage complying with specifications of the input of the inverter 3 is increased so as to become several times that of the commercial power source and feeding the thus-boosted voltage to the capacitor.

In the embodiment, pre-excitation is performed to inhibit occurrence of a rush current, which would otherwise be caused at start-up of the induction motor 4, during a period from time $t_1$ to time $t_2$ in Fig. 3. However, pre-excitation may not be performed. Moreover, the brake 6 is activated to prevent rotation of the induction motor during the period of pre-excitation. However, in the case where, because the period is very short, no substantial problem is raised even when the brake is omitted, the brake 6 may be omitted from the configuration.

In relation to the method for controlling the inverter, there are two additional conceivable methods: that is, a method called a current-type for controlling an electric current flowing through a motor, and a method called a voltage-type for controlling a voltage applied to a motor. In the case of the voltage-type method, there may also be employed a PAM method for varying a DC voltage and a PWM method for varying the width of a switching pulse of a transistor. A more preferable method for the latter method can also be a quasi-sinewave PWM method for varying the width of a switching pulse of a transistor such that an output mean voltage more closely approximates a sine-wave. In any event, the output voltage of the present invention is taken not as a so-called peak value of a voltage which is output through chopping but as a mean (effective) value.

As shown in Fig. 2, the control circuit 12 can also be configured on a per-functional-block basis. However, the control circuit 12 may also be configured so as to perform these control operations in the form of a microprocessor and software to be stored previously. In the control circuit 12 shown in Fig. 2, the F/V converter 23 is configured to perform so-called V/F control by means of generating the voltage instruction value $|V|$ on the basis of a V/F pattern. In contrast, for instance, the slip frequency computing device 29 is replaced with a known vector computing device which computes a slip frequency $\omega_s$ and has other functions. In view of the relationship between the output frequency $\omega_1^{**}$ and the slip frequency $\omega_s$, the vector computing device computes a corrected value of the $\omega_1^{**}$—which is an output frequency of the acceleration computing device 21—or a corrected value of the voltage instruction value $|V|$ to be supplied to the F/V computing device 23, thereby correcting the output frequency or the slip frequency. Thus, there may be performed control based on the rotational speed of the induction motor; that is, so-called vector control. Moreover, the control circuit 12 may be configured to compute and output the primary voltage compensation value Vc to the F/V converter 23 so that the thus-replaced vector computing device should perform, e.g., primary voltage compensation operation for compensating for a drop in the voltage in the primary winding of the induction motor. Alternatively, the control circuit 12 may also be configured to subject the frequency $\omega_1^{**}$ output from the acceleration/deceleration computing device 21 to addition and output so as to compensate for a slip frequency such that the induction motor rotates at a target speed or to output a torque compensation signal $\tau_E$ in place of the signal $\tau_E$ to the P-I computing device 26.

As has been described, according to the invention of, there is performed processing pertaining to a first process in which an output frequency is increased up to an output frequency corresponding to that achieved during steady-state operation and in which the induction motor is accelerated by means of producing an output for increasing anAC voltage to an overvoltage state in accordance with the output frequency. There is also performed processing pertaining to a second process for decreasing the AC voltage to a voltage corresponding to the steady-stateoperationwhentherotationalspeedoftheinduction motor has achieved a predetermined speed. Therefore, the induction motor can be caused to immediately achieve the speed for steady-state operation. Moreover, the amount of overshoot which would subsequently arise in the rotational speed is noticeably diminished,and the rotationalspeed canbe maintained. Accordingly, in a weaving machine in which the quality of a web is affected by the rotational speed of the induction motor at start-up, the rotational speed can be controlled highly accurately, and hence adjustment of aweavingbar becomes easier.

Further, according to the drive device of an induction motor of the present invention, the driving method of the present invention can be implemented easily.

Further, according to the.present invention, the inverter can be configured more specifically. Further, according to the present invention, the rotational speed of the induction motor can be grasped by means of a slip frequency without addition of a new member to an output shaft of a motor. A new sensor or the like to be used for detecting a rotational speed does not need to be disposed. Correspondingly, a risk of failure in a sensor is eliminated, and maintainability is improved.

Further, according to the present invention, the rotational speed can be detected directly, and hence the rotational speed can be ascertained more accurately. Moreover, the circuit configuration of the control circuit or that of a signal generator can be simplified. Further, according to the invention, the degree of acceleration of an induction motor can be set more readily by way of a V/F pattern.

**Claims**

1. A driving method of an induction motor, in which a multiphase induction motor is operated by a variable-voltage variable-frequency inverter for feeding an AC voltage to a primary winding of the multiphase induction motor, comprising the steps of:

   a first step of increasing an output frequency to a frequency corresponding to a steady-state operation, and producing an output for increasing the AC voltage to an overvoltage state in accordance with the output frequency, thereby accelerating the induction motor; and
   a second step of lowering the AC voltage to a voltage corresponding to the steady-state operation when the rotational speed of the induction motor has achieved a predetermined speed.

2. A drive device of an induction motor comprising:

   a multiphase induction motor; and
   a variable-voltage variable-frequency inverter connected between a commercial power source and the multiphase induction motor, the variable-voltage variable-frequency inverter outputs an AC voltage to a primary winding of the induction motor,

   wherein, upon receipt of an instruction for starting the induction motor, the inverter increases an output frequency toward a frequency corresponding to a rotational speed achieved during steady-state operation, accelerates the induction motor by producing an output for increasing the AC voltage to an overvoltage state in accordance with the output frequency; and
   wherein when the rotational speed of the induction motor has achieved a predetermined speed by determining the rotational speed of the induction motor, the inverter decreases the AC voltage to a voltage corresponding to the steady-state operation.

3. The drive device of an induction motor according to claim 2, wherein the inverter includes:

   a main circuit that outputs power supplied from the commercial power source to the primary winding in accordance with a base drive signal; and
   a control circuit that supplies the base drive signal to the main circuit,

   wherein, upon receipt of an instruction for starting the induction motor, the control circuit outputs the base drive signal in order to increase an output frequency toward a frequency corresponding to a rotational speed achieved during steady-state operation, and to bring the AC voltage into an overvoltage state in accordance with the output frequency; and
   wherein when the rotational speed of the induction motor has achieved the predetermined speed by determining the rotational speed of the induction motor, the control circuit outputs the base drive signal in order to decreases the AC voltage to a voltage corresponding to the steady-state operation.

4. The drive device of an induction motor according to claim 3, wherein the control circuit determines a slip frequency of the induction motor from an output current value of the main circuit and an excitation current output from the main circuit, and detects attainment of the predetermined speed by comparing the slip frequency with a set value corresponding to the

**5.** The drive device of an induction motor according to claim 2, wherein the inverter includes:

a main circuit for outputting power supplied from the commercial power source to the primary winding according to a base drive signal; a control circuit that receives a start instruction for starting the induction motor and generates a base drive signal in order to increase an output frequency and an output voltage in response to an input of the start instruction; and a signal generation means that receives a signal corresponding to a rotational speed of the induction motor and outputs an attainment signal when the rotational speed of the induction motor has attained the predetermined speed, and

wherein, upon receipt of the instruction for starting the induction motor, the control circuit outputs the base drive signal in order to increase an output frequency toward a frequency corresponding to a rotational speed achieved during steady-state operation, as well as outputs the base drive signal in order to bring the AC voltage into an overvoltage state in accordance with the output frequency; and

wherein, upon receipt of the attainment signal as a result of the rotational speed of the induction motor having attained the predetermined speed, the control circuit outputs the base drive signal in order to output an AC voltage that decreases an output voltage toward a voltage achieved during stead-state operation.

**6.** The drive device of an induction motor according to claim 2, wherein the inverter includes :

a main circuit for outputting power supplied from the commercial power source to the primary winding according to a base drive signal; and a control circuit that receives a start instruction for starting the induction motor and generates a base drive signal in order to increase an output frequency and an output voltage in response to an input of the start instruction, wherein the control circuit comprises a signal generating means for receiving a signal corresponding to the rotational speed of the induction motor and outputting an attainment signal when the rotational speed has attained the predetermined speed, and

wherein, upon receipt of the instruction for starting the induction motor, the control circuit outputs the base drive signal in order to increase an output frequency toward a frequency corresponding to a rotational speed achievedduring steady-state operation, as well as outputs the base drive signal in order to bring the AC voltage into an overvoltage state in accordance with the output frequency, and

wherein, upon receipt of the attainment signal, the control circuit outputs the base drive signal in order to decrease an AC voltage to a voltage corresponding to a voltage achieved during steadstate operation.

**7.** The drive device of an induction motor according to claim 5, further comprising:

a rotational speed detector coupled to an output shaft of the induction motor, wherein a rotational speed signal output from the rotational speed detector is input to the signal generating means, and

wherein the signal generating means outputs an attainment signal, upon detection of the rotational speed having attained a predetermined speed.

**8.** The drive device of an induction motor according to claim 6, further comprising:

a rotational speed detector coupled to an output shaft of the induction motor, wherein a rotational speed signal output from the rotational speed detector is input to the signal generation means, and

wherein the signal generating means outputs an attainment signal, upon detection of the rotational speed having attained a predetermined speed.

**9.** The drive device of an induction motor according to claim 2, wherein the control circuit sets a V/F pattern for the overvoltage state, and

wherein the control circuit produces the base drive signal in order to produce an AC voltage corresponding to an output frequency on the basis of the V/F pattern when an AC voltage is brought into an overvoltage state in accordance with the output frequency.

predetermined speed.

FIG. 1

EP 1 494 345 A2

## FIG. 2

FIG. 2

# FIG. 3

## FIG. 4

COMMERCIAL POWER SOURCE 2

INVERTER 3

1 1

CURRENT DITECTOR

BASE DRIVE SIGNAL

CURRENT SIGNAL

1 3

THROWING CIRCUIT

ELECTRO-MAGNETIC SWITCH

7

THREE-PHASE INDUCTION MOTOR 4

M

LOAD 5

B BRAKE 6

T G 33

CONTROL CIRCUIT

1 2

THROWING INSTRUCTION SIGNAL $S_1$

8

BRAKE RELEASE SIGNAL $S_2$

$S_4$

SETTING DEVICE 37 $(R_0)$

SPEED ATTAINMENT SIGNAL S3

3 6

ROTATIONAL SPEED ATTAINMENT DETECTOR (SIGNAL GENERATION MEANS)

EP 1 494 345 A2

# FIG. 5

## FIG. 6

EP 1 494 345 A2

INVERTER

4 1

3

4 2

2

COMMERCIAL
POWER SOURCE

CURRENT
DITECTOR

1 3

BASE
DRIVE
SIGNAL

ELECTRO-MAGNETIC
SWITCH

7

THREE -PHASE
INDUCTION MOTOR
4

M

5

LOAD

B

BRAKE
6

CONTROL
CIRCUIT

1 2

CURRENT SIGNAL

THROWING INSTRUCTION
SIGNAL S₁

8

THROWING
CIRCUIT

BRAKE RELEASE SIGNAL S₂